Europäisches Patentamt

European Patent Office

Office européen des brevets

(19)

(11) Publication number: **0 067 225**
**B1**

(12) **EUROPEAN PATENT SPECIFICATION**

(45) Date of publication of patent specification: **20.08.86**

(51) Int. Cl.⁴: **H 02 K 15/06**

(21) Application number: **81900147.0**

(22) Date of filing: **24.12.80**

(86) International application number:
**PCT/JP80/00324**

(87) International publication number:
**WO 82/02290 08.07.82 Gazette 82/17**

(54) **COIL FORMING APPARATUS.**

<table>
<tr><td>

(43) Date of publication of application:
**22.12.82 Bulletin 82/51**

(45) Publication of the grant of the patent:
**20.08.86 Bulletin 86/34**

(84) Designated Contracting States:
**DE FR GB**

(56) References cited:
**US-A-3 510 939**
**US-A-3 977 444**
**US-A-4 217 938**

</td><td>

(73) Proprietor: **Matsushita Electric Industrial Co., Ltd.**
**1006, Oaza Kadoma**
**Kadoma-shi Osaka-fu, 571 (JP)**

(72) Inventor: **KUBOTA, Tadashi**
**5-4, Myokentaka 4-chome Katano-shi**
**Osaka-fu 576 (JP)**
Inventor: **HAMANE, Tokuhito**
**16-19, Nagaodani-cho 3-chome Hirakata-shi**
**Osaka-fu 573-01 (JP)**
Inventor: **TASAI, Masaaki**
**Syowa-Ryo 16-1, Miyamae-cho**
**Kadoma-shi Osaka-fu 571 (JP)**

(74) Representative: **Crawford, Andrew Birkby et al**
**A.A. THORNTON & CO. Northumberland House**
**303-306 High Holborn**
**London WC1V 7LE (GB)**

</td></tr>
</table>

Courier Press, Leamington Spa, England.

## Description

### TECHNICAL FIELD

The present invention relates to an apparatus for producing coils for the stators of electric machines and particularly to a coil forming apparatus of the type in which a coil being formed is dropped into a coil receiving jig while winding a wire around a winding frame. The invention provides a coil winding machine adapted to facilitate and optimize the wire treatment between coils for the poles and at the terminal ends of coils.

### BACKGROUND ART

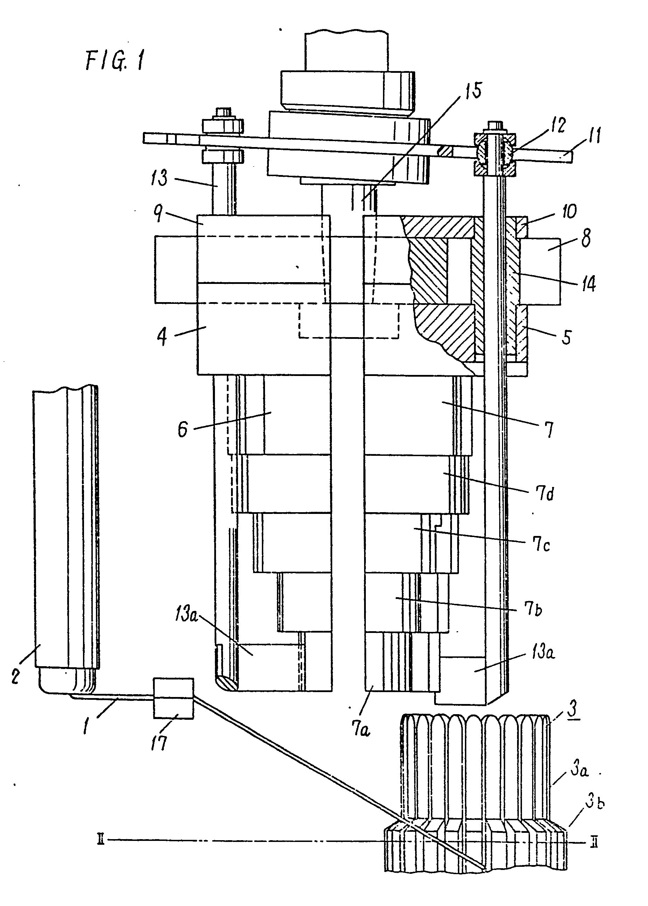

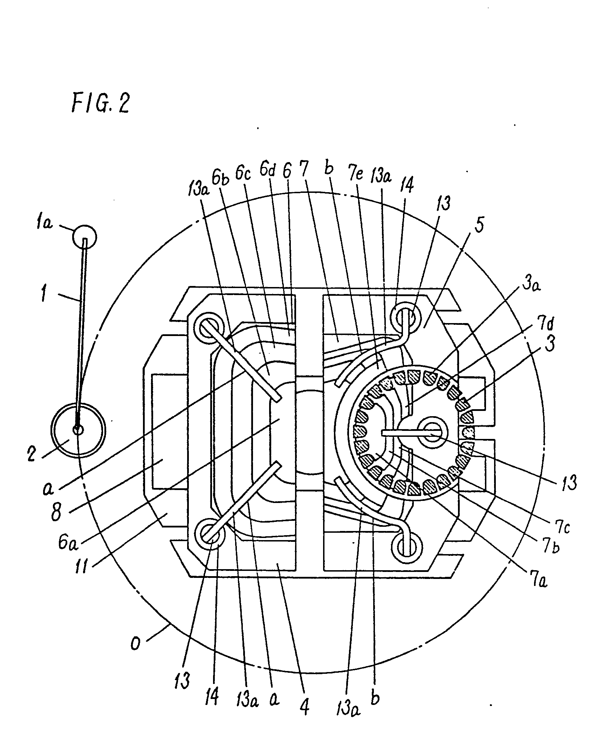

This type of conventional coil winding apparatuses include one shown on Figs. 1 through 5.

The numeral 1 denotes a wire; 2 denotes a flyer through which the wire 1 is passed; and 3 denotes a coil receiving jig provided with blades 3a and insulator insertion guide 3b. The numerals 4 and 5 denote winding frame attaching plates, and 6 denotes a movable winding frame provided with winding steps 6a, 6b, 6c and 6d. The numeral 7 denotes a fixed winding frame provided with winding steps 7a, 7b, 7c and 7d and having an insertion hole 7e in which to insert the coil insertion jig 3. The movable and fixed winding frames 6 and 7 are put together to form a winding frame. The numeral 8 denotes a support plate, and 9 and 10 denote hold-down plates for fixing the winding frame attaching plates 4 and 5 to the support plate 8. The numeral 11 denotes vertically swingable tilt plate; 12 denotes a spherical bearing; and 13 denotes coil pusher bars adapted to be vertically moved with the swing movement of said tilt plate 11. Further, 13a denotes pusher plates adapted to be vertically slidable in slits a and b formed in the winding frames 6 and 7. The numeral 14 denotes a bearing metal element for slidably supporting the pusher bar 13; 15 denotes a shaft for fixing the support plate 8; and 16 denotes a coil.

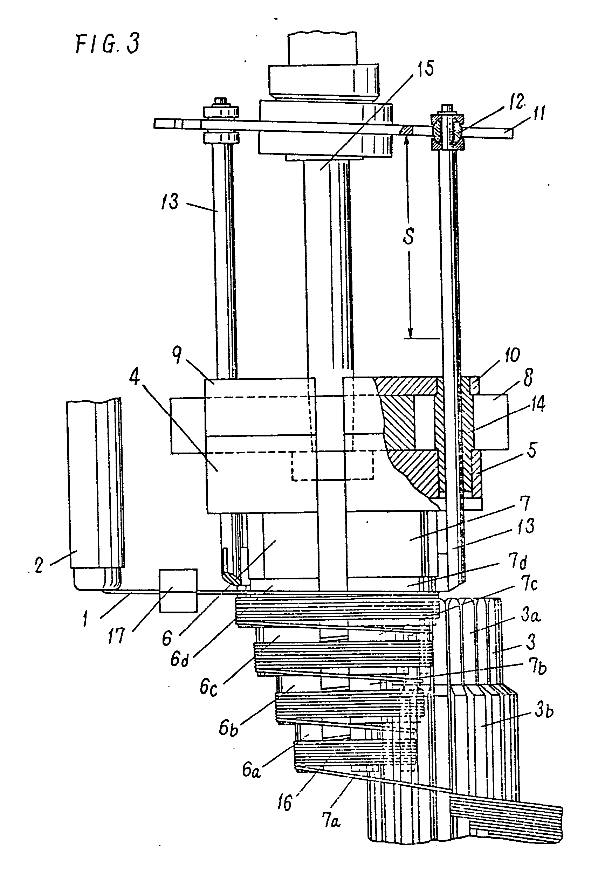

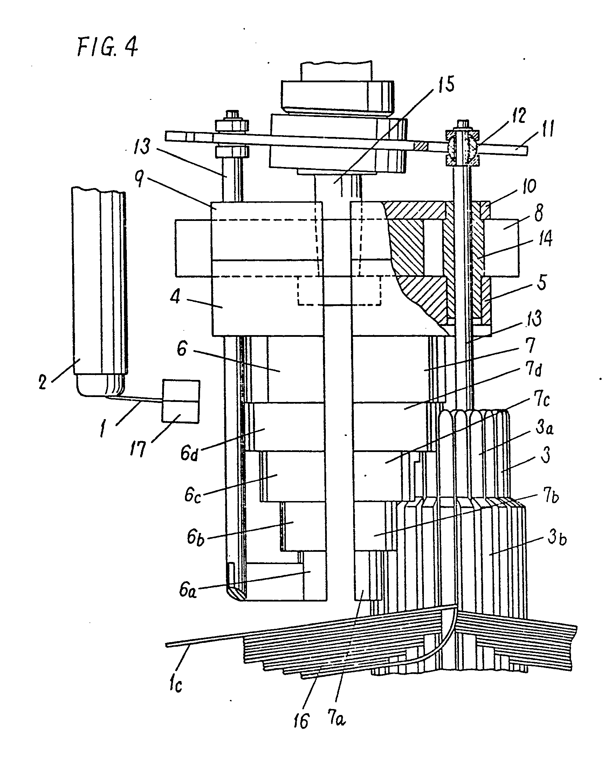

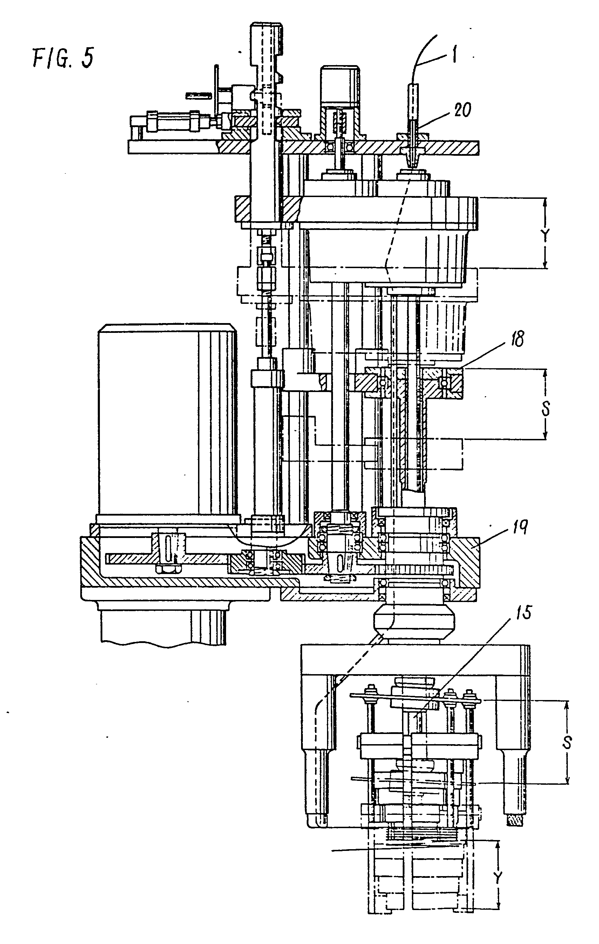

In the arrangement described above, when the coil receiving jig 3 is positioned under the fixed winding frame 7. The shaft 15 lowered, the coil insertion jig 3 is inserted in the insertion hole 7e of the fixed winding frame 7, the winding step 7a and blades 3a mesh with each other, the flyer 2 having the wire 1 inserted therein rotates along a circular path 0, and the wire 1 is wound around the winding steps 6a and 7a; thus, the formation of the coil 16 for the step is started. At this instant, the end 1a of the wire 1 is gripped by a lead wire cutter (not shown), but will be released when the coil 16 having a predetermined number of turns is formed. Further, in synchronism with the rotation of the flyer 2, the tilt plate 11 swings, moving the coil pusher bars 13 up and down through the intermediary of the spherical bearings 12, with the pusher plates 13a at their front ends gradually downwardly moving the coil 16 formed on the winding steps 6a and 7a by the flyer 2, so that except a portion of the coil formed at the end of winding, all other portions are dropped into the coil insertion jig. Upon completion of the formation of the coil for the first step, the shaft 15 lowers again bringing the winding step 7b on the fixed winding frame 7 into engagement with the blades 3a, so that the wire 1, which is being wound around the winding steps 6a and 7a, is then wound onto the winding steps 6b and 7b: thus formation of the coil for the second step is started. The formation of the coil for the third and fourth steps will be effected in the same way (Fig. 3). Upon completion of the formation of the coil for one pole, a coil gripper 17 approaches the movable winding frame 6 so as to grip the wire 1 between the movable winding frame 6 and the flyer 2; it grips the wire 1 with weak force. Subsequently, the pusher plates 13a on the coil pusher bars 13 are lowered through a stroke S in Fig. 3, whereby the coil 16 partly left on the individual winding steps is held down on the coil receiving jig 3. At this instant, the coil gripper 17 is gripping the wire 1 with weak force allowing the wire to slide. When the coil 16 is fully pressed into the coil receiving jig 3, the coil pusher bars 13 and shaft 15 are lifted, separating the coil receiving jig 3 from the insertion hole 7e of the fixed winding frame 7 to complete the formation of the coil for one pole.

In the above arrangement, a support mechanism 18 for the shaft 15 supporting the winding frames 6 and 7 must be positioned above the level of a plate 19 which rotatably supports the flyer 2 and hence, in order to allow the winding frame to descend through a stroke Y, it is necessary to provide a space corresponding to the stroke Y between the support mechanism and the flyer rotating mechanism, resulting in a disadvantage that the height of the apparatus increases. The increased height of the apparatus means that insertion of the wire 1 into a wire passageway 20, etc., located in the uppermost region of the apparatus must be performed at a high place, thus making the handling of the apparatus inconvenient.

Further, another disadvantage is that the large downward stroke S of the coil pusher bars 13 entails much time in pushing the coil 16 into the coil receiving jig 3.

US—A—2,510,939 discloses a coil forming apparatus comprising a non-collapsing, multistage, coil form having a number of different size coil-forming stages on which turns of electrically conductive wire are wound by a reversibly rotatable flyer assembly into serially connected coils of different sizes as some of the turns are being transferred into a coil-receiving assembly. During the winding of the turns, the tendency of the wire to oscillate is reduced as it is being held. At least some of the turns are automatically transferred into the coil-receiving assembly as other turns are being wound in the same coils, all of the turns being transferred from the multistage coil form without need for collapsing the form. The coil-receiving assembly and coil form are indexed relative to one another at the proper time to accommodate all coil groups in a given winding.

The apparatus disclosed in US—A—3,977,444 selects increments of relative travel of portions of at least one coil insertion apparatus in response to the actual height of a selected magnetic core and interdependently adjust the mechanical interrelationships between two or more parts of winding turn establishing means of winding apparatus so as to provide one or more turns of conductive material having a size and shape that is particularly adapted for placement in slots of the selected magnetic core. During the interdependent adjustment, one or more additional coil insertion apparatus may be interdependently adjusted. In one approach, a gauge measures actual axial length of core and mechanism concurrently sets up winding size determining means. The gauge may be coil insertion apparatus.

Also disclosed is apparatus for adjusting winding turn size (this being related to stack height), for adjusting the "span" of winding turns so that they may selectively be of "odd" or "even" span and for selectively determining relative angular indexing of winding turn receiving means so that the polar axes of adjacent coil groups may be angularly displaced substantially any desired amount. Winding apparatus includes winding turn size determining means that are made up of a plurality of parts, at least some of which are movable relative to one another so as to provide winding turns of a desired span and size.

US—A—4,217,938 discloses apparatus for producing dynamoelectric machine coil groups or winding poles. A clamp device, relatively axially movable coil form and turn receiver, and relatively rotatable flyer are used, and interpole wire segments are established by intercepting, at a fixed location, a segment of wire extending between the form and flyer prior to complete cessation of relative rotation between the same.

Intercoil winding segments are also accurately established. For example, an intercoil winding segment is deflected out of the winding plane and in a direction toward a subsequent winding form stage during the development of the last turn of coil developed on the previous winding stage. Deflection of the intercoil winding segment is preferably accomplished substantially concurrently with advancement of the winding form relative to the turn receiver. In one form, a inclined ramp is moved into the winding plane and into interfering relation with an intercoil winding segment as the winding segment is being developed and as a subsequent winding stage is being moved into the winding plane.

The present invention provides a coil forming apparatus comprising a winding frame around which a wire is wound to form a coil, a flyer winding the wire around the winding frame, pusher plates movably received on the winding frame for pushing off the coil vertically downwardly so as to move downwardly the coil wound on the winding frame by the flyer, and a coil receiving jig disposed below the winding frame for receiving the coil wound on the winding frame, said winding frame being formed with winding steps of successively different sizes axially connected together on which to form coils of different sizes, said coil pusher plates being formed stepwise corresponding to the winding steps, each step projecting a predetermined distance radially outwards of the coil forming surface of the winding frame as disclosed in the above mentioned document US—A—3,510,939. The present invention characterised in that the winding steps are supported for reciprocal movement up and down in synchronism with the rotation of said flyer so as to let each step of said coil pusher plates push said coil formed on the winding steps during the winding operation of said flyer.

In order that the present invention be more readily understood, an embodiment thereof will now be described by way of example with reference to the accompanying drawings, in which:-

Fig. 1 is a front view showing how a coil is formed on a conventional coil forming apparatus provided with coil pusher bars;

Fig. 2 is a sectional view taken along the line II—II in Fig. 1;

Fig. 3 and 4 are front views showing different states of said apparatus;

Fig. 5 is a front view, partly in section, showing the whole of said apparatus; and

Figs. 6 through 9 are sectional views showing different winding states of a winding frame provided with coil pusher plates in an embodiment of the present invention.

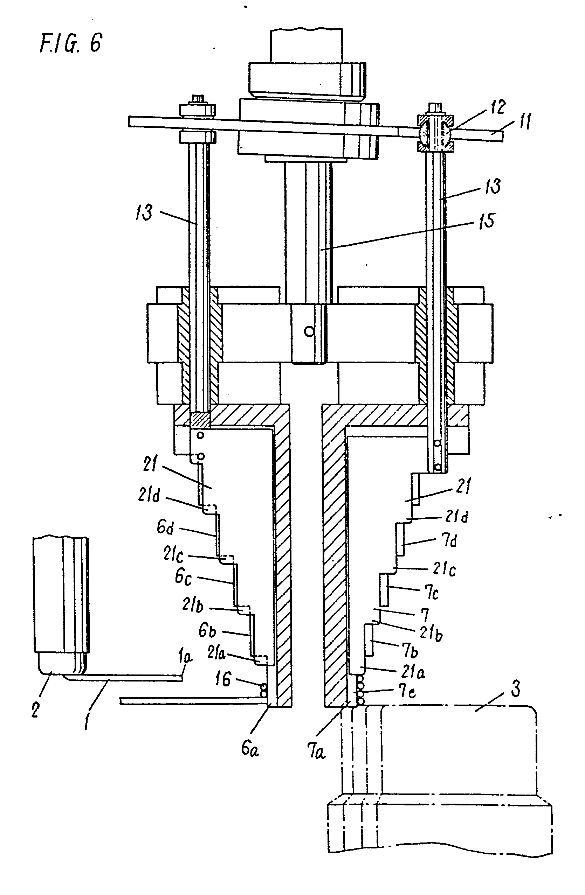

An embodiment of the invention will now be described with reference to Figs. 6 through 9.

In Fig. 6, the numeral 21 denotes hold-down plates fixed on hold-down bars 13 and being essentially different in shape from the hold-down plates 13a in the conventional example (Fig. 1). That is, the hold-down plates 21 of the invention have coil pusher portions 21a, 21b, 21c and 21d disposed inside the outer end lines of the winding steps 6b, 6c, 6d, . . . on the winding frames 6 and 7 but outside the adjoining lower outer end lines of the winding steps 6a, 6b, and 6c, said hold-down plates being made of plates in stepped form substantially corresponding to the stepped form of said winding frames 6 and 7.

In the above arrangement, when the coil receiving jig 3 is positioned under the fixed winding frame 7, the shaft 15 is lowered and the coil receiving jig 3 is inserted in the insertion hole 7e of the fixed winding frame 7. Concurrently, the pusher plates 21 on the coil pusher bars 13 are lowered the same distance as that travelled by the winding frame 7. The flyer 2 having the wire 1 passed therethrough is rotated to wind the wire 1 around the winding steps 6a and 7a, thus starting the formation of a coil 16 for the first step. At this instant, the end 1a of the wire 1 is gripped by a lead wire cutter (not shown), which will release the wire 1 when the coil 16 having a predetermined number of turns in formed. Further, in synchronism with the rotation of the flyer 2, the tilt plate 11 swings, moving the coil pusher bars 13 up and down through the intermediary of the spherical bearings 12, with the coil pusher por-

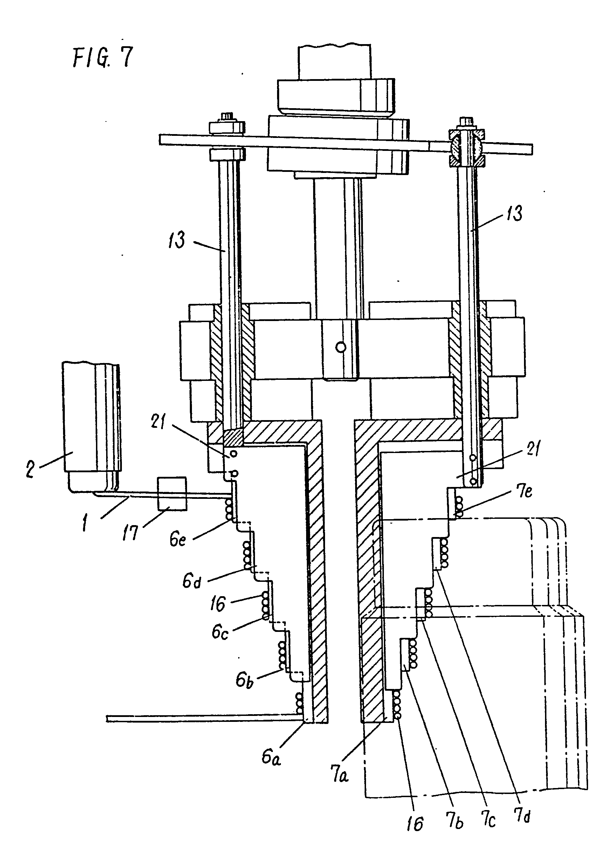

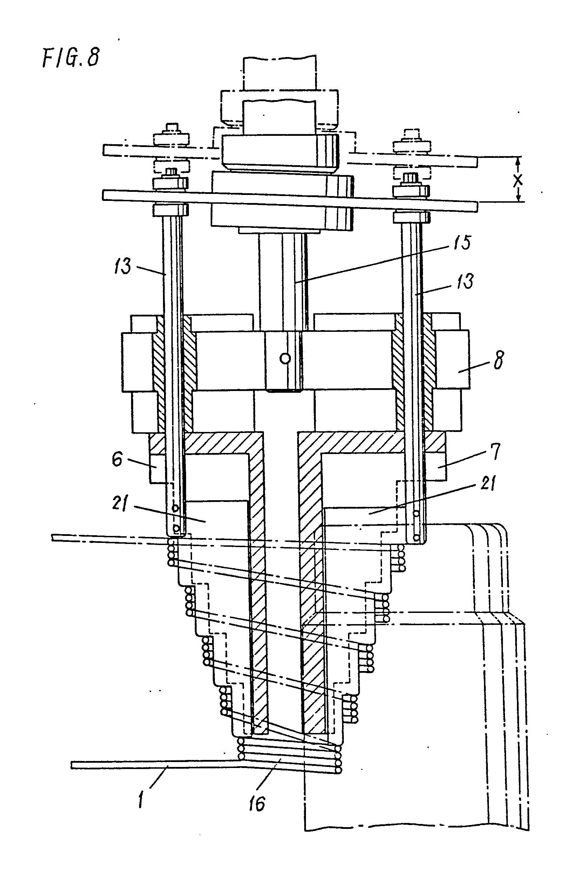

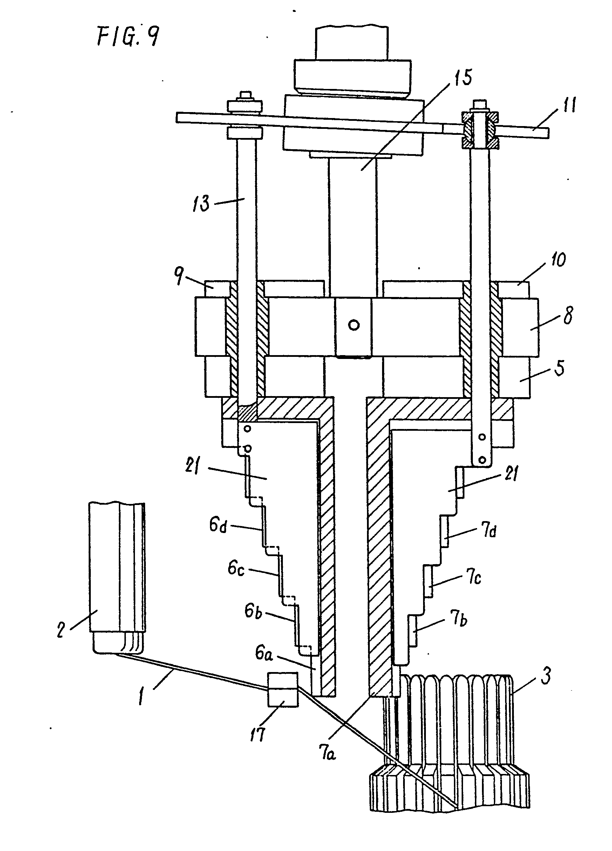

tions 21a of the pusher plates 21 gradually downwardly moving the coil 16 formed on the winding steps 6a and 7a by the flyer 2, so that except a portion of the coil at the end of winding, all other portions are dropped into coil receiving jig 3. Upon completion of the formation of the coil for the first step, the shaft 15 is lowered again, bringing the winding step 7b on the fixed winding frame 7 into engagement with the blades 3b. The coil pusher bars 13 are lowered the same distance as that travelled by the winding frames 6 and 7. The wire, which is being wound around the winding steps 6a and 7a by the flyer 2, is then wound onto the winding steps 6b and 7b; thus, the formation of the coil for the second step is started. Concurrently with the formation of the coil, the coil is progressively pushed into the coil receiving jig 3 by the up-and-down movement of the pusher plates 21, but, this time, the coil pusher portions 21b of the pusher plates 21 contribute to the drop-in of the coil. Moreover, the same up-and-down movement of the pusher plates 21 as that for the first step winding operation suffices for the purpose. The formation of the coil in the third and fourth step winding operations is effected in the same way, with the coil drop-in operation progressively shifting to the coil pusher portions 21c and 21d. Fig. 7 shows the completion of the formation of the coil for the first pole. Upon completion of the formation of the coil, in order to grip the wire 1 between the winding frames 6 and 7 and the flyer 2, the wire gripper 17 approaches the winding frames 6 and 7 and grips the wire 1 with weak force. Subsequently, as shown in Fig. 8, the pusher plates 21 are lowered through a stroke indicated by X (substantially equal to the height of each winding step), pushing the coil 16 wound on the winding steps into the coil receiving jig 3. At this instant, the gripper 17 is gripping the wire 1 with weak force allowing the wire 1 to slide. When the coil has been completely pushed into the coil receiving jig 3, the pusher plates 21 and winding frames 6 and 7 are lifted. Subsequently, the wire gripper 17 is moved centrally of the winding frames 6 and 7, and the coil receiving jig 3 is then rotated for indexing corresponding to 360°/the number of poles, whereupon it is positioned under the fixed winding frame 7. At this instant, the wire gripper 17 grips the wire 1 with strong force, moving to follow the indexing operation of the coil receiving jig 3, and the winding step 7a meshes again with the blades 3a. The positional relation which exists at this instant between the winding frames 6 and 7 and the gripper 17 and the wire 1 is shown in Fig. 9. Thereafter, the formation for the second pole is performed in the same way as for the first pole. As can be understood from the foregoing arrangement. When the gripper 17 approaches the winding steps 6b, 6c, and 6d, it does not strike the pusher plates 13a as it does in the conventional example, so that it is possible for the gripper to approach close to them, thus reducing the length of the bridge portion of the coil extending to the next pole. Further, since the winding frames 6 and 7 and the pusher bars 13 move at the same time, the space corresponding to the stroke Y in Fig. 5 can be eliminated and the overall height of the apparatus can be greatly reduced.

## INDUSTRIAL APPLICABILITY

In the coil forming apparatus provided with the coil pusher plates acording to the present invention, since the bridging line can be shortened, it is possible to improve the performance of the product and facilitate the subsequent process. Since the winding frame and pusher bars move at the same time, the overall height of the machine is reduced, the manufacturer, maintenance and adjustment of the machine become easier, and the cost is low.

## Claim

A coil forming apparatus comprising a winding frame (6, 7) around a wire (1) is wound to form a coil (16), a flyer (2) winding the wire around the winding frame, pusher plates (21) movably received on the winding frame for pushing off the coil vertically downwardly so as to move downwardly the coil wound on the winding frame by the flyer (2), and a coil receiving jig (3) disposed below the winding frame (6, 7) for receiving the coil (16) wound on the winding frame, said winding frame being formed with winding steps (6a—6d, 7a—7d) of successively different sizes axially connected together on which to form coils of different sizes, said coil pusher plates (21) being formed stepwise corresponding to the winding steps (6a—6d, 7a—7d), each step projecting a predetermined distance radially outwards of the coil forming surface of the winding frame (6, 7) characterised in that the winding steps (6a—6d, 7a—7d) are supported for reciprocal movement up and down in synchronism with the rotation of said flyer (2) so as to let each step of said coil pusher plates (21) push said coil (16) formed on the winding steps during the winding operation of said flyer (2).

## Patentanspruch

Spulenwickelvorrichtung, enthaltend einen Wickelrahmen (6, 7), um den ein Draht (1) gewikkel wird, um eine Spulte (16) auszubilden, einen Flügel (2), der den Draht um den Wickelrahmen wickelt, Schubplatten (21), die beweglich auf dem Wickelrahmen angeordnet sind, um die Spule vertikal nach unten abzuschieben, um die von dem Flügel (2) auf den Wickelrahmen gewickelte Spule nach unten zu bewegen, und eine spulenaufnahmevorrichtung (3), die unterhalb des Wickelrahmens (6, 7) angeordnet ist, um die auf dem Wickelrahmen gewickelte Spule (16) aufzunehmen, wobei der Wickelrahmen mit Wickstufen (6a—6d, 7a—7d) von aufeinanderfolgend unterschiedlichen Größen besteht, die axial miteinander verbunden sind, um auf ihnen Spulen unterschiedlicher Größen auszubilden, wobei die Spulenschubplatten (21) entsprechend den Wicklungsschritten (6a—6d, 7a—7d) stufenförmig ausgebildet sind, wobei jede Stufe um eine vorbestimmte Distanz radial von der die Spule formenden Fläche des Wickelrahmens (6, 7) nach außen vorsteht, dadurch gekennzeichnet, daß die Wickelstufen (6a—6d, 7a—7d) für eine auf—und abgehende Bewegung synchron mit der Drehung des Flügels (2) abgestützt sind, um jede Stufe der Spulenschubplatten (21) die auf den Wicklungsstufen ausgebildete Spule (16) während des Wickelbetriebs des Flügels (2) abstoßen zu lassen.

**Revendication**

Appareil de formation de bobine comprenant un cadre de bobinage (6, 7) autour duquel un fil (1) est bobiné pour former une bobine (16), un volant (2) bobinant le fil autour du cadre de bobinage, des plaques de poussée (21) reçues de manière mobile sur le cadre de bobinage et servant à pousser la bobine verticalement vers le bas de manière à déplacer vers le bas la bobine bobinée sur le cadre de bobinage par le volant (2), et un bâti (3) de réception de bobine disposé au-dessous du cadre de bobinage (6, 7) et servant à recevoir la bobine (16) bobinée sur le cadre de bobinage, ledit cadre de bobinage étant formé de gradins de bobinage (6a—6d, 7a—7d) de tailles successivement différentes qui sont axialement reliés ensemble et sur lesquels sont formées des bobines de différentes tailles, lesdites plaques (21) de poussée de bobine étant formées en gradins d'une maniére correspondant aux gradins de bobinage (6a—6d, 7a—7d), chaque gradin faisant saillie d'une distance prédéterminée radialement à l'extérieur de la surface de formation de bobine du cadre de bobinage (6, 7), caractérisé en ce que les gradins de bobinage (6a—6d, 7a—7d) sont montés de manière à effectuer un mouvement alternatif de montée et de descente en synchronisme avec la rotation dudit volant (2) afin de laisser chaque gradin desdites plaques de poussée de bobine (21) pousser ladite bobine (16) formée sur les gradins de bobinage pendant l'operation de bobinage effectuée par ledit volant (2).

FIG. 1

0 067 225

## FIG. 2

FIG. 3

0 067 225

3

FIG. 4

FIG. 5

FIG. 6

FIG. 7

FIG.8

FIG. 9